# EUROPÄISCHE PATENTSCHRIFT

(11) **EP 3 736 531 B1**
(45) Veröffentlichungstag und Bekanntmachung des Hinweises auf die Patenterteilung: **11.01.2023**
(21) Anmeldenummer: 20182098.2
(22) Anmeldetag: 23.11.2016
(51) Int. Cl.: G01C 15/00, A45C 13/18, G01S 19/16, H04W 4/029, H04W 12/126, H04W 12/12, G12B 9/00, A45C 11/00, A45C 13/02, G06F 21/88

(54) **SCHUTZBEHÄLTER**
PROTECTIVE CASE
RÉCIPIENT DE SÉCURITÉ

(30) Priorität: 24.11.2015 EP 15196101
(43) Veröffentlichungstag der Anmeldung: 11.11.2020
(62) Teilanmeldung aus: 16798797.3
(73) Patentinhaber: Leica Geosystems AG, 9435 Heerbrugg (CH)
(72) Erfinder: HARRING, Thomas, 6340 Baar (CH); BRODER, Katherine, 9491 Ruggel (LI); BÖCKEM, Burkhard, 8916 Jonen AG (CH)
(74) Vertreter: Kaminski Harmann

(56) Entgegenhaltungen:
- EP-A1- 2 737 820
- DE-U1- 20 204 826
- GB-A- 2 180 220
- GB-A- 2 430 865
- JP-A- 2005 312 779
- US-A1- 2003 011 466
- US-A1- 2008 116 093
- US-A1- 2010 100 972
- US-A1- 2012 279 875
- US-A1- 2013 109 375
- US-B1- 9 177 186

## Beschreibung

Die vorliegende Erfindung betrifft einen tragbaren Schutzbehälter, insbesondere ausgestaltet als ein Koffer, zum sicheren Transport und Verwahren von Vermessungsgeräten und anderen elektrischen Geräten. Insbesondere ist der erfindungsgemässe Schutzbehälter dazu ausgestaltet, ein im Inneren befindliches wertvolles und empfindliches Vermessungsgerät vor Diebstahl, unbefugtem Gebrauch und/oder potentiell schädlichen Umwelteinflüssen zu schützen. Dazu weist der Behälter erfindungsgemäss Kommunikationsmittel zum Senden und Empfangen von Daten über ein Funknetz auf, sowie zum Empfangen von Lokalisierungsdaten, die der Kommunikationseinheit ein zumindest grobes Lokalisieren des Behälters ermöglichen. Die Erfindung betrifft des weiteren ein System aus mehreren erfindungsgemässen Schutzbehältern, deren Kommunikationsmittel zum gegenseitigen Datenaustausch ausgestaltet sind. Ausserdem betrifft die Erfindung ein Verfahren zum Vorbereiten eines Vermessungsgerätes während eines Transports in einem Innenraum eines Behälters auf einen Einsatz und ein Verfahren zum Verhindern einer unberechtigten Verwendung eines in einem Schutzbehälter befindlichen Vermessungsgerätes.

Verfahren und Systeme zur Entfernungsmessung finden in verschiedenen Bereichen Anwendung. Beispiele hierfür sind ausgesprochen präzise Vermessungen in geodätischen Applikationen, aber auch Messaufgaben im Bereich der Bauinstallation oder für industrielle Prozesssteuerungen. Für diese Aufgaben werden stationäre, bewegbare oder auch handhaltbare Entfernungsmessgeräte eingesetzt, welche eine optische Entfernungsmessung zu einem ausgewählten Messpunkt ausführen. Als Vermessungsgerät werden im folgenden elektronische Instrumente verstanden, die im Rahmen der geodätischen, industriellen oder Bauvermessung Verwendung finden. Dies umfasst beispielsweise Geräte zur optischen Abstandsmessung oder zur Erfassung von dreidimensionalen Koordinaten entfernter Objekte wie Theodoliten, Tachymeter, Totalstationen, Lasertracker, Laserscanner oder handgehaltene Entfernungsmessgeräte, aber auch Hilfsmittel wie Rotations-, Kanalbau- oder Linienlaser oder GNSS-Empfangseinheiten.

Solche für professionelle Anwendungen gedachten, insbesondere hochpräzisen Geräte sind sowohl relativ teuer in der Anschaffung als auch empfindlich gegenüber schädlichen Umwelteinflüssen, wie z. B. Feuchtigkeit oder extremen Temperaturen, und gegenüber Erschütterungen und Stössen beim Transport. Es ist folglich wünschenswert, wertvolle Vermessungsgeräte effektiv vor unberechtigter Verwendung, Diebstahl und Beschädigung zu schützen.

Weiterhin ist es wünschenswert, dass diese Geräte möglichst effizient eingesetzt werden. Das heisst, dass insbesondere unnötige Wartezeiten am Einsatzort des Gerätes vermieden werden sollten - z. B. solche Zeiten in denen das Gerät vor dem Einsatz zunächst konfiguriert werden muss, in denen einsatzbezogene bzw. einsatzortbezogene Daten in das Gerät geladen werden, oder in denen das Gerät auf Betriebstemperatur gebracht wird.

Das Dokument US 2013/0109375 A1 offenbart einen tragbaren Schutzbehälter zum Transport eines elektrischen Vermessungsgerätes, wobei der Schutzbehälter eine Kommunikationseinrichtung zum Austausch von Daten mit dem in seinem Innenraum befindlichen Vermessungsgerät aufweist.

Die Dokumente EP2737820 A1 und US9177186 A1 offenbaren einen tragbaren Schutzbehälter mit einer auf einer äusseren Hülle angebrachten Anzeigeeinheit.

Es ist daher eine Aufgabe der vorliegenden Erfindung, einen verbesserten Schutzbehälter für Vermessungsgeräte bereitzustellen.

Es ist eine weitere Aufgabe, einen solchen Schutzbehälter bereitzustellen, der eine zumindest grobe Ortung des Behälters ermöglicht.

Es ist eine weitere Aufgabe, einen solchen Schutzbehälter und ein Verfahren bereitzustellen, die eine unberechtigte Verwendung eines darin befindlichen Vermessungsgerätes verhindern oder erschweren.

Es ist eine weitere Aufgabe, einen solchen Schutzbehälter und ein Verfahren bereitzustellen, die es ermöglichen, ein im Schutzbehälter befindliches Vermessungsgerät auf einen Einsatz vorzubereiten.

Eine weitere Aufgabe ist es, einen solchen Schutzbehälter bzw. ein System mehrerer solcher Schutzbehältern bereitzustellen, mit dem eine Vollständigkeitsprüfung der zu transportierenden Vermessungsgeräte erleichtert wird.

Mindestens eine dieser Aufgaben wird durch die Verwirklichung der kennzeichnenden Merkmale der unabhängigen Ansprüche gelöst. Vorteilhafte Ausgestaltungen der Erfindung finden sich dabei in den jeweils abhängigen Ansprüchen.

Ein erster Aspekt der vorliegenden Erfindung betrifft einen tragbaren Vermessungsgerätschutzbehälter (kurz: Schutzbehälter) zum Transport eines elektrischen Vermessungsgerätes gemäss Anspruch 1.

Dieser weist eine äussere Hülle mit innerer Verschalung auf, die einen Innenraum umschliesst, welcher zur Aufnahme des Vermessungsgerätes ausgestaltet ist, wobei der Innenraum mindestens eine Halterung aufweist und wobei die mindestens eine Halterung speziell zur Aufnahme eines bestimmten Vermessungsgeräte-Typs mit bekannten Ausmassen ausgestaltet ist. Ausserdem weist der Schutzbehälter einen Griff auf, der dazu ausgestaltet ist, ein Tragen des Schutzbehälters durch einen Benutzer zu ermöglichen, einen Schliessmechanismus, der dazu ausgestaltet ist, ein Öffnen des Schutzbehälters durch einen Benutzer zu ermöglichen, eine in den Schutzbehälter, insbesondere in die Hülle oder die Verschalung, integrierte Kommunikationseinheit, und eine mindestens einen Akkumulator aufweisende Versorgungseinheit zur Stromversorgung der Kommunikationseinheit. Erfindungsgemäss weist der Schutzbehälter Überprüfungsmittel zum Überprüfen eines Vorhandenseins und einer Identität eines Vermessungsgerätes im Innenraum auf. Die Kommunikationseinheit ist dazu ausgestaltet, Daten über Vorhandensein und Identität des Vermessungsgerätes abzurufen, Daten über ein externes Funknetz abzurufen und zu versenden, insbesondere über ein terrestrisches oder satellitengestütztes Mobilfunknetz oder ein lokales Netzwerk, und Lokalisierungsdaten zu empfangen, die eine zumindest grobe Position des Schutzbehälters bereitstellen.

Erfindungsgemäss ist der erfindungsgemässe Schutzbehälter zur Aufnahme eines bestimmten Vermessungsgerätes oder eines bestimmten Vermessungsgeräte-Typs mit bekannten Ausmassen ausgestaltet. Ein solches Vermessungsgerät kann insbesondere als eines der folgenden ausgestaltet sein:
- ein Theodolit,
- eine Totalstation,
- ein Lasertracker,
- ein Laserscanner,
- ein Rotationslaser,
- ein Digitalnivellier,
- ein handhaltbares Entfernungsmessgerät,
- ein Detektionsgerät,
- ein Linienlaser oder
- eine GNSS-Empfangseinheit.

Optional kann der Schutzbehälter Rollen oder Räder aufweisen, die dazu ausgestaltet sind, ein Bewegen des Behälters durch einen einzelnen Benutzer mittels Schieben oder Ziehen zu ermöglichen.

Insbesondere kann dabei der Innenraum mit einem Trägermaterial verfüllt sein, beispielsweise einem Schaumstoff oder einer mittels Blasformen hergestellter Kunststoffform, wobei die mindestens eine Halterung eine Aussparung in dem Trägermaterial mit einer dem Vermessungsgerät entsprechenden Form ist.

Zur Aufnahme von Bauteilen eines zerlegten Vermessungsgerätes kann der Innenraum optional mehrere entsprechend ausgestaltete Halterungen aufweisen. Ebenso kann der Innenraum zusätzlich mindestens eine zur Aufnahme eines Ersatz- oder Zubehörteiles des Vermessungsgerätes ausgestaltete Halterung aufweisen.

Gemäss einer weiteren Ausführungsform weisen die Überprüfungsmittel eine Kamera, einen Annäherungssensor, einen Barcodescanner oder ein RFID-Lesegerät auf, um ein Vorhandensein eines aufzunehmenden Vermessungsgerätes (bzw. die Vollständigkeit aller aufzunehmenden Teile) im Innenraum zu überprüfen und/oder die Identität des Vermessungsgerätes festzustellen.

Gemäss einer weiteren Ausführungsform weist der erfindungsgemässe Schutzbehälter Mittel zum Generieren eines kabellosen Datennetzwerkes im Innenraum auf, beispielsweise mittels Bluetooth oder eines WLAN-Signals.

Erfindungsgemäss ist die Kommunikationseinheit dazu ausgestaltet, z. B. über dieses kabellose Datennetzwerk, Daten mit dem Vermessungsgerät auszutauschen, wobei die Kommunikationseinheit dazu ausgestaltet ist, über das Funknetz abgerufene Daten an das Vermessungsgerät weiterzuleiten und/oder von dem Vermessungsgerät empfangene Daten zu versenden.

Erfindungsgemäss weist der erfindungsgemässe Schutzbehälter auf seiner äusseren Hülle eine Anzeigeeinheit zum Anzeigen von Informationen über ein im Innenraum befindliches Vermessungsgerät auf, insbesondere in Form eines Touchscreens oder eines E-Papier-Displays, wobei die Kommunikationseinheit dazu ausgestaltet ist, die Informationen über das im Innenraum befindliche Vermessungsgerät der Anzeigeeinheit bereitzustellen.

In einer Ausführungsform ist die Versorgungseinheit zusätzlich auch zur Stromversorgung des Vermessungsgerätes im Innenraum mittels eines Kabels, mittels elektrischer Kontakte oder mittels Induktion ausgestaltet ist.

Diese Versorgungseinheit weist einen Akkumulator und zusätzlich insbesondere einen Strom-Generator eine Brennstoffzelle, Solarzellen, oder Mittel für eine externe Stromversorgung (z. B. einen Anschluss für ein Stromkabel, Induktionsspulen oder elektrische Kontakte) auf.

Auch kann der Behälter Mittel zum Anzeigen eines Ladezustands des Gerätes aufweisen, oder die Kommunikationseinheit zum Versenden von Informationen bezüglich des Ladezustands des Vermessungsgerätes, respektive der Versorgungseinheit ausgestaltet sein.

Optional kann die Versorgungseinheit darüber hinaus zur Vorbereitung des Geräts auf den nächsten Einsatz das Laden des internen Akkumulators des Vermessungsgerätes initiieren. Zum Laden herangezogen werden könnten beispielsweise ein Akkumulator der Versorgungseinheit (als Not-Puffer), ein sich im Behälter befindlicher Ersatzakku des Vermessungsgerätes, der an die Behälterelektronik angeschlossen ist, oder eine externe Stromquelle, wie etwa ein Fahrzeugbordnetz.

Falls erkannt wird, dass der (Gesamt-)Ladezustand in an Betracht des geplanten Einsatzes kritisch ist, kann eine Warnung an den Benutzer ergehen. Nach dem Einsatz kann der Behälter den Ladezustand signalisieren und/oder den Anschluss an eine externe Stromquelle anfordern.

Gemäss einer anderen Ausführungsform ist die Kommunikationseinheit dazu ausgestaltet, eine Verbindung mit dem Internet herzustellen, und die Daten über das Internet abzurufen und zu versenden.

In einer Ausführungsform kann die Kommunikationseinheit zum Austausch von Daten eine Verbindung mit einer Kommunikationseinheit mindestens eines weiteren Schutzbehälters aufnehmen.

In einer Ausführungsform kann die Kommunikationseinheit zum Austausch von Daten eine Verbindung mit einem weiteren Vermessungsgerät aufnehmen, welches nicht über einen eigenen Schutzbehälter mit Kommunikationseinheit verfügt.

Gemäss einer anderen Ausführungsform ist die Kommunikationseinheit dazu ausgestaltet, eine Verbindung mit einem den Schutzbehälter aufnehmenden Transportmittel, insbesondere Fahrzeug, herzustellen. Beispielsweise kann auf Daten eines Navigationssystems des Fahrzeugs zugreifbar sein, oder ein lokales Netzwerk (z. B. WLAN oder Bluetooth) des Fahrzeugs zur Kommunikation über das Internet verwendet werden.

Gemäss einer weiteren Ausführungsform ist die Kommunikationseinheit dazu ausgestaltet, die Daten selbsttätig abzurufen und/oder selbsttätig zu versenden, insbesondere von einem bzw. an einen externen Servercomputer.

Erfindungsgemäss ist die Kommunikationseinheit dazu ausgestaltet, die Lokalisierungsdaten über das Funknetz abzurufen.

Gemäss einer weiteren Ausführungsform weist der Schutzbehälter eine GNSS-Empfangseinheit zur Positionsbestimmung des Behälters mittels eines globalen Navigationssatellitensystems auf, wobei die Kommunikationseinheit dazu ausgestaltet ist, die Lokalisierungsdaten von der GNSS-Empfangseinheit zu empfangen.

Erfindungsgemäss ist die Kommunikationseinheit dazu ausgestaltet, basierend auf den abgerufenen Daten eine zumindest grobe Position des Schutzbehälters zu ermitteln. Dabei ist die Position des Behälters insbesondere auf mindestens dreihundert Meter genau ermittelbar ist, vorzugsweise auf mindestens dreissig Meter genau. Optional kann die Kommunikationseinheit dazu ausgestaltet sein, basierend auf einer Vielzahl von abgeleiteten Positionen des Behälters ein Bewegungsprofil zu erstellen. In einer weiteren Ausführungsform des erfindungsgemässen Schutzbehälters ist die Kommunikationseinheit dazu ausgestaltet, basierend auf der ermittelten Position des Schutzbehälters und auf einem bekannten Einsatzort des Vermessungsgerätes eine Restzeit bis zu einer Ankunft des Behälters am Einsatzort zu ermitteln, d. h. insbesondere zu berechnen oder zu schätzen. Dabei sind durch die Kommunikationseinheit vorzugsweise solche Daten abrufbar, aus denen der Einsatzort ermittelbar ist.

Die Kommunikationseinheit ist dazu ausgestaltet sein, Daten mit dem Vermessungsgerät auszutauschen und kann dazu ausgestaltet sein, basierend auf einer ermittelten Restzeit selbsttätig das Vermessungsgerät einzuschalten und/oder einsatzortbezogene Daten an das Vermessungsgerät zu übermitteln.

In einer weiteren Ausführungsform weist der erfindungsgemässe Schutzbehälter zur Regelung einer Temperatur des Innenraumes bzw. des Vermessungsgerätes eine Temperaturregelungseinheit auf mit einer Temperaturerfassungseinheit und einer Heiz- und/oder Kühlfunktion. Die Kommunikationseinheit ist in dieser Ausführungsform dazu ausgestaltet, basierend auf einer ermittelten Restzeit einen Befehl an die Temperaturregelungseinheit zu geben, die Temperatur des Innenraumes bzw. des Vermessungsgerätes einer optimalen Betriebstemperatur des Vermessungsgerätes anzunähern oder anzugleichen.

Optional weist der Schutzbehälter eine Trocknungsfunktionalität auf, um ein nass eingelegtes Vermessungsgerät zu trocknen.

Gemäss einer weiteren Ausführungsform ist die Kommunikationseinheit des Behälters dazu ausgestaltet, basierend auf einer ermittelten Position des Behälters einen Befehl an den Schliessmechanismus des Behälters zu senden. Der Schliessmechanismus ist gemäss dieser Ausführungsform dazu ausgestaltet, in Abhängigkeit von dem von der Kommunikationseinheit erhaltenen Befehl, ein bestimmungsgemässes Öffnen des Behälters durch einen Benutzer zu verhindern oder zu ermöglichen, und/oder den Behälter selbsttätig zu öffnen. Wird ein Öffnen verhindert, kann beispielsweise eine Codeeingabe durch den Benutzer erforderlich sein, um den Behälter zu öffnen, oder ein Transport an einen anderen Ort.

Erfindungsgemäss ist die Kommunikationseinheit des Behälters dazu ausgestaltet, einen Befehl an ein im Innenraum befindliches Vermessungsgerät zu senden, einen Sperrmodus zu aktivieren (bzw. einen voreingestellten Sperrmodus zu deaktivieren), in welchem wesentliche Funktionen des Vermessungsgerätes nicht zur Verfügung stehen, bis zu einer Freischaltung des Vermessungsgerätes mittels eines Entsperrcodes.

Erfindungsgemäss sind durch die Kommunikationseinheit solche Daten abrufbar, aus denen ein Vorliegen oder Nichtvorliegen einer Nutzungsberechtigung des Vermessungsgerätes ermittelbar ist, und die Kommunikationseinheit ist dazu ausgestaltet, basierend auf den Daten das Vorliegen oder Nichtvorliegen einer Nutzungsberechtigung des Vermessungsgerätes zu ermitteln. Die Daten sind dabei von einem externen Server abrufbar, insbesondere über das Internet.

Der Schutzbehälter kann optional Mittel aufweisen, die dazu ausgestaltet sind, einen Öffnungsversuch des Schliessmechanismus zu erkennen und an die Kommunikationseinheit zu melden.

Erfindungsgemäss weist der Schutzbehälter eine automatisch ablaufende Diebstahlschutzfunktionalität auf, im Rahmen derer die Kommunikationseinheit - wenn ein Nichtvorliegen einer Nutzungsberechtigung des Vermessungsgerätes ermittelt wurde - dazu ausgestaltet ist,
- eine Position des Behälters an einen externen Server zu übermitteln;
- einen Befehl an ein im Innenraum befindliches Vermessungsgerät zu senden, einen Sperrmodus zu aktivieren (bzw. einen voreingestellten Sperrmodus zu deaktivieren), in welchem zumindest wesentliche Funktionen des Vermessungsgerätes nicht zur Verfügung stehen, bis zu einer Freischaltung des Vermessungsgerätes mittels eines Entsperrcodes;
- einen Befehl an den Schliessmechanismus zu senden, und der Schliessmechanismus dazu ausgestaltet ist, in Abhängigkeit von dem von der Kommunikationseinheit erhaltenen Befehl ein Öffnen des Behälters durch einen Benutzer zu verhindern; wobei die Kommunikationseinheit zusätzlich dazu ausgestaltet sein kann,
- einen Befehl an eine Alarmeinheit des Behälters zu senden, und die Alarmeinheit dazu ausgestaltet ist, in Abhängigkeit von dem von der Kommunikationseinheit erhaltenen Befehl ein optisches und/oder akustisches Warnsignal auszugeben;
- einen Befehl an eine Selbstzerstörungseinheit des Behälters zu senden, und die Selbstzerstörungseinheit dazu ausgestaltet ist, in Abhängigkeit von dem von der Kommunikationseinheit erhaltenen Befehl ein im Innenraum befindliches Vermessungsgerät bzw. wesentliche Teile desselben dauerhaft unbrauchbar zu machen oder zu zerstören, und/oder
- einen Befehl an eine Markierungseinheit des Behälters zu senden, und die Markierungseinheit dazu ausgestaltet ist, in Abhängigkeit von dem von der Kommunikationseinheit erhaltenen Befehl ein im Innenraum befindliches Vermessungsgerät optisch (z. B. als gestohlen) zu markieren.

Der Schutzbehälter kann Mittel aufweisen, die dazu ausgestaltet sind, ein nicht-bestimmungsgemässes, insbesondere gewaltsames, Öffnen des Behälters (z. B. ein Aufbrechen des Schliessmechanismus oder der äusseren Hülle) zu erkennen. Alternativ kann bei Vorliegen einer Nutzungsberechtigung, basierend auf zeit-, orts-, einsatz-, oder personenbezogenen Informationen auch ein Befehl an ein im Innenraum befindliches Vermessungsgerät gesendet werden (z. B. von einem Server empfangene Lizenzcodes), um eine oder mehrere Funktionen freizuschalten. Ansonsten bleibt das Vermessungsgerät gesperrt oder nur eingeschränkt funktionstüchtig.

In einer weiteren Ausführungsform ist der Schutzbehälter mit zusätzlichen Sensoren zur Erfassung und Aufzeichnung von Umwelteinflüssen, wie z. B. Feuchtigkeit, Temperatur, Erschütterungen und Stössen ausgestattet, welche die Kommunikationseinheit regelmässig oder nach Abruf bereitstellt oder an einen zentralen Server übermittelt. Dies kann insbesondere dazu dienen, unsachgemässe Transport- und Lagerbedingungen festzustellen, vor möglichen Beeinträchtigungen des Funktionszustandes (Kalibrierung) zu warnen, oder die gewonnen Informationen bei der Beurteilung von Garantiefällen heranzuziehen.

Ein zweiter, nicht beanspruchter Aspekt der vorliegenden Erfindung betrifft ein System von mindestens zwei erfindungsgemässen Schutzbehältern. In den Schutzbehältern des erfindungsgemässen Systems ist die Kommunikationseinheit jeweils dazu ausgestaltet, eine Verbindung mit Kommunikationseinheiten anderer Schutzbehälter herzustellen und Daten auszutauschen, die mindestens Informationen über im Innenraum der Schutzbehälter befindliche Vermessungsgeräte beinhalten. Dabei beinhalten die Daten beispielsweise mindestens Informationen über ein Vorhandensein bzw. eine Vollständigkeit sowie eine Identität der Vermessungsgeräte. Die Daten sind insbesondere mittels einer WPAN- oder WLAN-Verbindung austauschbar. Vorzugsweise kann mindestens eine erste Kommunikationseinheit dazu ausgestaltet sein, über das Funknetz abgerufene Daten an andere Kommunikationseinheiten weiterzuleiten, und von anderen Kommunikationseinheiten erhaltene Daten über das Funknetz zu versenden.

Ein dritter, nicht beanspruchter Aspekt der vorliegenden Erfindung betrifft ein Verfahren zum Vorbereiten eines Vermessungsgerätes während eines Transports des Vermessungsgerätes in einem Innenraum eines erfindungsgemässen Schutzbehälters Behälters auf einen Einsatz an einem bekannten Einsatzort. Der Behälter ist dabei ein Vermessungsgerätschutzbehälter gemäss dem ersten Aspekt der Erfindung. Das Verfahren umfasst
- ein Abrufen von Lokalisierungsdaten, die eine zumindest grobe Lokalisierbarkeit bereitstellen,
- ein Ermitteln, basierend auf den Lokalisierungsdaten, einer zumindest groben Position des Vermessungsgerätes, und
- ein Ermitteln, basierend auf der ermittelten Position und dem bekannten Einsatzort, einer Restzeit bis zu einer Ankunft am Einsatzort.

Dabei wird, basierend auf der ermittelten Restzeit, das Vermessungsgerät eingeschaltet, insbesondere wobei einsatzortbezogene Daten an das Vermessungsgerät übermittelt werden. Alternativ wird, basierend auf der ermittelten Restzeit, ein Akku des Vermessungsgerätes geladen. Alternativ oder zusätzlich wird, basierend auf der ermittelten Restzeit, eine Temperatur des Innenraumes bzw. des Vermessungsgerätes einer optimalen Betriebstemperatur des Vermessungsgerätes angenähert oder angeglichen.

Ein vierter Aspekt der vorliegenden Erfindung betrifft ein Verfahren gemäss Anspruch 10 zum Verhindern einer unberechtigten Verwendung eines in einem Schutzbehälter, insbesondere einem tragbaren Vermessungsgerätschutzbehälter gemäss dem ersten Aspekt der Erfindung, befindlichen Vermessungsgerätes.

In einer Ausführungsform wird im Rahmen der automatisch ablaufenden Diebstahlschutzfunktionalität
- ein optisches und/oder akustisches Warnsignal ausgegeben;
- das Vermessungsgerät optisch markiert; und/oder
- das Vermessungsgerät unbrauchbar gemacht, insbesondere dadurch, dass wesentliche Funktionen des Vermessungsgerätes deaktiviert werden, wobei diese insbesondere bis zu einer Freischaltung mittels eines Entsperrcodes nicht zur Verfügung stehen, oder dauerhaft zerstört werden.

Optional kann dabei ein nicht-bestimmungsgemässes, insbesondere gewaltsames, Öffnen des Behälters erkennbar sein, wobei die Diebstahlschutzfunktionalität bei Erkennen eines nicht-bestimmungsgemässen Öffnens des Behälters automatisch ausgelöst wird.

Erfindungsgemäss weist der Schutzbehälter eine Mensch-Maschine-Schnittstelle auf seiner äusseren Hülle auf, insbesondere wobei die Anzeigeeinheit und die Schnittstelle als ein Touchscreen ausgestaltet sind. Gemäss einer weiteren Ausführungsform ist die Anzeigeeinheit in Form eines E-Papier-Displays ausgestaltet.

Eine weitere Ausführungsform des Schutzbehälters ist dadurch gekennzeichnet, dass die Informationen über das im Innenraum befindliche Gerät mindestens folgendes umfassen:
- einen Ladezustand einer Batterie des Gerätes,
- eine Konfiguration des Gerätes, oder
- Informationen über einen Mietvertrag des Gerätes, insbesondere über einen Mieter, Besitzer und/oder Rückgabetermin.

In einer Ausführungsform des Schutzbehälters weisen die Überprüfungsmittel mindestens eine Kamera, einen Annäherungssensor, einen Barcodescanner oder ein RFID-Lesegerät auf. Gemäss einer weiteren Ausführungsform sind die Überprüfungsmittel dazu ausgestaltet, das Vorhandensein bzw. die Identität des Gerätes mittels eines kabellosen Datennetzwerkes zu überprüfen.

Erfindungsgemäss ist die Kommunikationseinheit dazu ausgestaltet,
- Daten über ein Funknetz abzurufen und zu versenden, insbesondere über ein terrestrisches oder satellitengestütztes Mobilfunknetz oder ein lokales Netzwerk, und
- über das Funknetz abgerufene Daten an das Gerät weiterzuleiten und/oder von dem Gerät empfangene Daten zu versenden.

Gemäss einer weiteren Ausführungsform ist die Kommunikationseinheit dazu ausgestaltet,
- eine Verbindung mit mindestens einem Gerät aufzunehmen, welches sich nicht im Innenraum des Schutzbehälters befindet;
- eine Verbindung mit einer Kommunikationseinheit mindestens eines weiteren Schutzbehälters aufzunehmen; und/oder
- eine Verbindung mit einem den Schutzbehälter aufnehmenden Transportmittel, insbesondere Fahrzeug, herzustellen.

Erfindungsgemäss ist die Kommunikationseinheit dazu ausgestaltet, Lokalisierungsdaten zu empfangen, die eine zumindest grobe Position des Schutzbehälters bereitstellen. Insbesondere ist die Kommunikationseinheit dabei dazu ausgestaltet, die Lokalisierungsdaten über das Funknetz abzurufen oder mittels GNSS zu empfangen, und/oder basierend auf einer Vielzahl von abgeleiteten Positionen des Schutzbehälters ein Bewegungsprofil zu erstellen. Insbesondere ist die Position des Schutzbehälters auf mindestens dreihundert Meter genau ermittelbar, vorzugsweise auf mindestens dreissig Meter genau.

Gemäss einer weiteren Ausführungsform ist die Versorgungseinheit zusätzlich zur Stromversorgung des Gerätes im Innenraum mittels eines Kabels, mittels elektrischer Kontakte oder mittels Induktion ausgestaltet.

Gemäss einer weiteren Ausführungsform weist die Versorgungseinheit zusätzlich einen Strom-Generator, eine Brennstoffzelle, Solarzellen oder Mittel für eine externe Stromversorgung, insbesondere einen Anschluss für ein Stromkabel, Induktionsspulen oder elektrische Kontakte, auf.

Erfindungsgemäss weist der Schutzbehälter einen Griff, der dazu ausgestaltet ist, ein Tragen des Schutzbehälters durch einen Benutzer zu ermöglichen, und einen Schliessmechanismus, der dazu ausgestaltet ist, ein Öffnen des Schutzbehälters durch einen Benutzer zu ermöglichen, auf.

Gemäss einer weiteren Ausführungsform des Schutzbehälters ist der Innenraum mit einem Trägermaterial, insbesondere einem Schaumstoff oder einer mittels Blasformen hergestellter Kunststoffform, verfüllt, und die mindestens eine Halterung ist eine Aussparung in dem Trägermaterial mit einer dem Gerät entsprechenden Form.

Gemäss einer weiteren Ausführungsform des Schutzbehälters ist die mindestens eine Halterung zur Aufnahme von Bauteilen eines zerlegten Gerätes und/oder eines Ersatzteiles oder Zubehörteiles des Gerätes ausgestaltet.

Der erfindungsgemässe Vermessungsschutzbehälter und die Schutzverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine Totalstation als Beispiel für ein in einem erfindungsgemässen Schutzbehälter transportierbares Vermessungsgerät;
- Fig. 2a-b: eine beispielhafte Ausführungsform eines erfindungsgemässen Schutzbehälters im geöffneten Zustand zur Aufnahme der Totalstation aus Fig. 1;
- Fig. 3: ein Kommunizieren einer Kommunikationseinheit des Schutzbehälters mit einem externen Server über das Internet;
- Fig. 4: ein Kommunizieren der Kommunikationseinheit mit anderen Komponenten des Schutzbehälters und mit dem transportierten Vermessungsgerät;
- Fig. 5: ein Flussdiagramm zur Illustration eines Verfahrens zum selbsttätigen Vorbereiten eines transportierten Vermessungsgerätes auf einen Einsatz durch den Schutzbehälter;
- Fig. 6: ein Flussdiagramm zur Illustration eines Verfahrens zum ortsabhängigen Verhindern der Entnahme des transportierten Vermessungsgerätes; und
- Fig. 7: ein Flussdiagramm zur Illustration eines Verfahrens zum Schutz des transportierten Vermessungsgerätes vor Diebstahl.

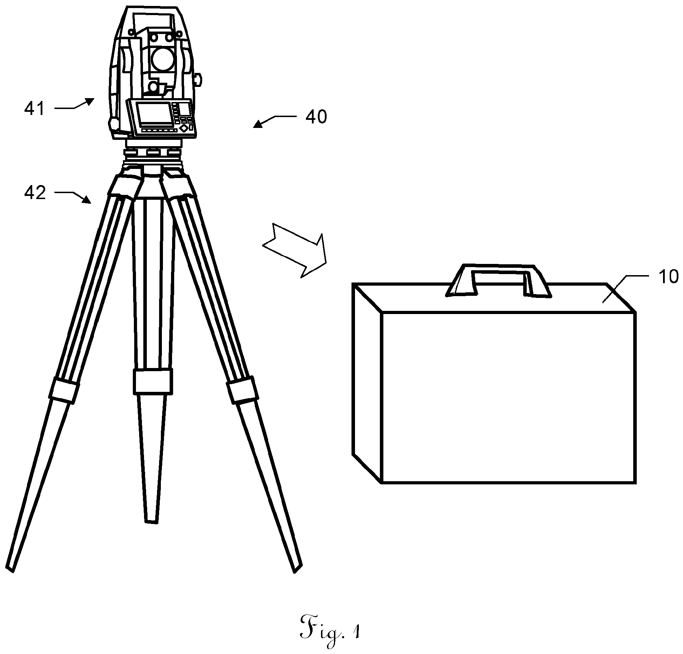

Figur 1 zeigt einen als Koffer 10 als erfindungsgemässen Schutzbehälter zum Transport eines Vermessungsgerätes. Als zu transportierendes Vermessungsgerät ist hier rein beispielhaft eine Totalstation 40 dargestellt. Diese ist in einen Oberteil 41 und eine Stativeinheit 42 zerlegbar.

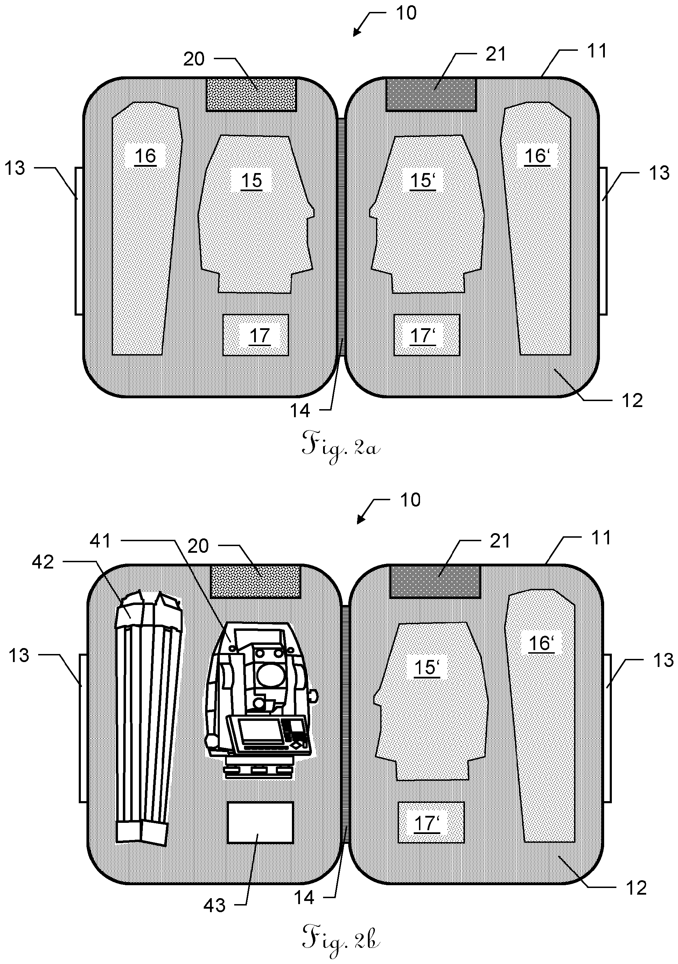

In den Figuren 2a und 2b ist eine beispielhafte Ausführungsform des als Koffer 10 ausgestalteten Schutzbehälters dargestellt. Dabei zeigt Figur 2a einen aufgeklappten leeren Koffer 10, und Figur 2b denselben Koffer mit eingesetzten Komponenten und Zubehörteilen einer Totalstation 41-43.

Der erfindungsgemässe Schutzbehälter 10 weist einen Schliessmechanismus 13 auf, mittels welchem der Schutzbehälter verschlossen werden kann. Beispielsweise kann der Schliessmechanismus 13 mittels Schlüssel zu öffnen und schliessen sein oder ein mechanisches oder elektronisches Zahlenschloss oder auch einen Fingerabdruckscanner aufweisen. Es sind aber generell auch andere Arten von Schliessmechanismus denkbar. Erfindungsgemäss weist der Behälter 10 ausserdem eine Kommunikationseinheit 20 auf, die zum Aufbau einer Kommunikationsverbindung über ein Funknetz ausgestaltet ist. Dazu weist die Kommunikationseinheit 20 beispielsweise eine SIM-Karte und eine Mobilfunkantenne auf. Alternativ oder zusätzlich kann eine Verbindung über ein lokales Netzwerk wie z. B. WLAN aufgebaut werden. Optional kann die Kommunikationseinheit 20 zusätzlich eine GNSS-Empfangseinheit zur Positionsbestimmung des Behälters mittels eines globalen Navigationssatellitensystems (z. B. GPS) aufweisen.

Wie in Figur 2a rein beispielhaft dargestellt, kann der Schutzbehälter 10 als ein Koffer ausgestaltet sein, dessen zwei Hälften mittels eines Scharniers 14 auseinandergeklappt werden können, um den Koffer so zu öffnen. Der Koffer weist eine Hülle 11 auf, die vorzugsweise stabil und wasserfest ausgestaltet ist und die einen Innenraum 12 des Koffers vollständig umschliesst. In dem Innenraum 12 sind Halterungen vorgesehen, um das Vermessungsgerät, bzw. dessen Komponenten und Zubehör- bzw. Ersatzteile aufzunehmen und vorzugsweise zu fixieren. In dem hier gezeigten Beispiel sind diese Halterungen als Aussparungen 15-17, 15'-17' in einem mit einem weichen aber formstabilen Schaumstoff ausgeführt, der im wesentlichen den gesamten Innenraum 12 ausfüllt. Alternativ kann der Innenraum auch durch Blasformen (z. B. Extrusions- oder Streckblasformen) in eine entsprechende Form gebracht werden.

Die Aussparungen 15-17, 15'-17' befinden sich in beiden Kofferhälften und sind den zu transportierenden Komponenten und Teilen des Vermessungsgerätes entsprechend geformt. Des weiteren weist der Koffer eine Batterie bzw. einen Akkumulator 21 zur Stromversorgung der Kommunikationseinheit 20 auf. Die Kommunikationseinheit 20 ist so im Innenraum 12 angebracht und die Hülle 11 ist so ausgestaltet, dass eine Kommunikation der Kommunikationseinheit 20 über ein externes Funknetz ermöglicht wird. Insbesondere kann dazu eine Antenne der Kommunikationseinheit 20 in die Hülle 11 integriert sein.

In Figur 2b sind ein Oberteil 41 und eine Stativeinheit 42 der Totalstation 40 aus Figur 1 in zwei der Aussparungen 15, 16 der ersten Kofferhälfte eingefügt. Die dritte Aussparung 17 hat als Zubehörteil der Totalstation einen Akku 43 aufgenommen. Die Aussparungen 15'-17' der zweiten Kofferhälfte nehmen bei einem Schliessen des Koffers 10 die überstehenden Teile der Totalstation-Komponenten 41-43 auf.

Um die Laufzeit des Akkus 43 zu verlängern, können vorzugsweise verschiedene Mittel zum Energy Harvesting vorhanden sein. Ebenso kann die Kommunikationseinheit energiesparende Betriebsarten aufweisen, z. B. einen periodischen Betrieb mit regelmässigen Inaktivitätsphasen (Schlafzyklen).

Vorzugsweise kann der Behälter einen Anschluss für eine externe Stromversorgung aufweisen (hier nicht dargestellt). Dies kann zum einen ein einfacher Anschluss für ein Stromkabel sein, zum anderen auch speziell konzipierte Kontakte oder Induktionsspulen, die ebenso speziell ausgestaltete Gegenstücke haben, die ein Aufladen für einen Benutzer besonders einfach machen. Diese Gegenstücke können zum Beispiel in einem Fahrzeug verbaut sein, das die Behälter transportiert oder Teil der Regale sein, in denen die Behälter gelagert werden, wenn sie nicht gebraucht werden, so dass die Geräte stets einsatzbereit sind, ohne sie aus dem Behälter entfernen zu müssen.

Der Akku 43 kann vorzugsweise auch zur Stromversorgung des transportierten Vermessungsgerätes 40 verwendet werden. Insbesondere kann während eines Transports der Akku des Gerätes geladen werden. Der Behälter kann dazu im Innenraum entsprechende Mittel zur Stromversorgung des Vermessungsgerätes 40 aufweisen. Diese können ein passendes Kabel beinhalten, dass vom Benutzer in das Vermessungsgerät 40 einzustecken ist, oder in den entsprechenden Aussparungen befindliche elektrische Kontakte, die beim Einlegen des Gerätes 40 automatisch mit entsprechenden Kontakten des Gerätes in Berührung kommen, sodass ein Strom fliessen kann. Ebenso kann eine Induktionsspule vorhanden sein, mittels welcher elektrische Energie in ein in den Behälter eingelegtes Vermessungsgerät übertragbar ist.

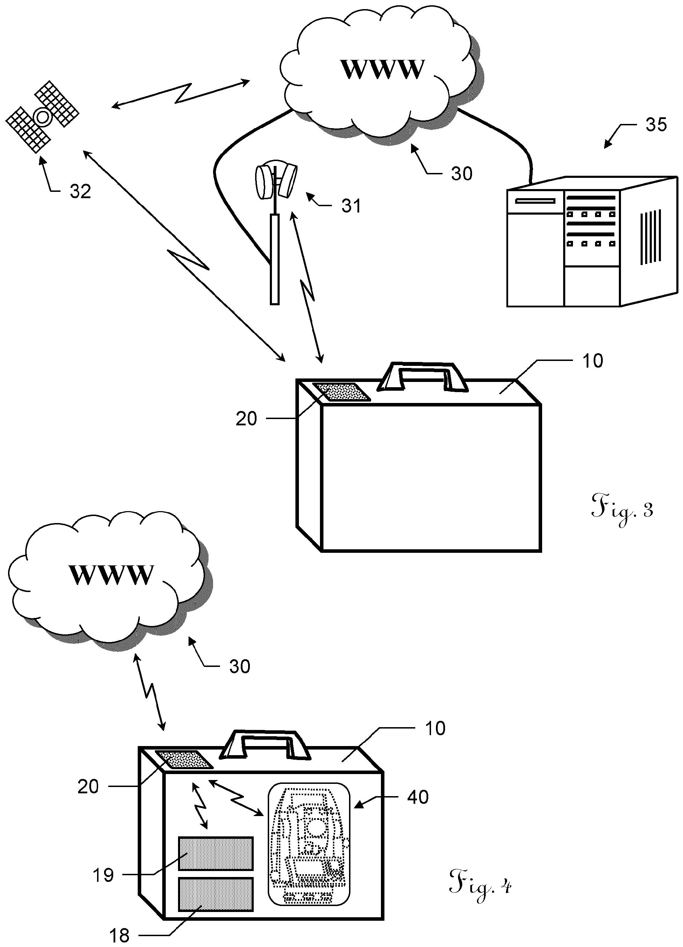

Figur 3 illustriert beispielhaft eine Kommunikation der Kommunikationseinheit 20 des Schutzbehälters 10 über das externe Funknetz. Dieses ist im dargestellten Beispiel ein Mobilfunknetz, und die Kommunikationseinheit 20 weist eine SIM-Karte auf, um über das Mobilfunknetz Daten austauschen zu können. Über Mobilfunkmasten 31 kann eine Verbindung mit einem terrestrischen Mobilfunknetz hergestellt werden, über Satelliten 32 mit einem satellitengestützten. Insbesondere können dann über das Internet 30 Daten mit einem externen Servercomputer 35 ausgetauscht werden. Durch die Verbindung mit dem Mobilfunknetz ist eine grobe Echtzeit-Lokalisierung des Behälters möglich, beispielsweise über GSM-Ortung.

Figur 4 illustriert beispielhaft eine interne Kommunikation der Kommunikationseinheit 20 des Schutzbehälters 10. Zusätzlich zur in Figur 3 illustrierten externen Kommunikationsfähigkeit kann die Kommunikationseinheit 20 vorzugsweise auch über eine interne Kommunikationsfähigkeit verfügen. So kann die Kommunikationseinheit 20 einerseits mit anderen Einheiten des Schutzbehälters 10 kommunizieren und andererseits über ein internes Funknetz - beispielsweise über WLAN oder Bluetooth - mit einem im Innenraum des Behälters transportierten Vermessungsgerät 40.

Als andere Einheiten des Schutzbehälters 10 sind hier rein beispielhaft eine Temperaturregelungseinheit 18 und eine Alarmeinheit 19 gezeigt.

Die Temperaturregelungseinheit 18 weist einerseits einen Temperaturfühler auf, der dazu ausgestaltet ist, eine Temperatur des Innenraums 12 zu erfassen; vorzugsweise kann er so angebracht sein, dass er eine Temperatur des Vermessungsgerätes 40 erfassen kann. Optional kann ein zweiter Temperaturfühler eine Aussentemperatur erfassen. Andererseits weist die Temperaturregelungseinheit 18 eine Heiz- und/oder Kühlfunktion auf, um die Temperatur des Innenraumes 12 bzw. des Vermessungsgerätes 40 zu erhöhen oder abzusenken. Beispielsweise kann die Temperatur während des gesamten Transports in einem bestimmten Bereich gehalten werden, um eine Beschädigung des Vermessungsgerätes 40 zu verhindern, oder das Vermessungsgerät 40 kann bereits vor Einsatzbeginn auf eine optimale Betriebstemperatur gebracht werden, um Verschleiss bzw. Wartezeiten zu reduzieren.

Alternativ oder zusätzlich zu dieser Temperaturregelungseinheit 18 kann auch eine Trocknungseinheit vorgesehen sein, die ein nach einem Einsatz nass im Behälter verpacktes Vermessungsgerät (z. B. nach einem Einsatz bei Regenwetter) trocknen kann. Dazu kann die Trocknungseinheit beispielsweise als Teil der Temperaturregelungseinheit 18 ausgeführt sein und mittels Heizfunktion und Ventilation die Feuchtigkeit aus dem Behälterinnenraum an die Umgebung abführen. Alternativ kommen auch andere Trocknungsmöglichkeiten in Frage wie Kondensationstrocknung oder Granulattrocknung.

Die Alarmeinheit 19 kann beispielsweise Leuchtmittel oder Lautsprecher aufweisen, um bei Bedarf optische oder akustische Warnsignale auszugeben.

Die Kommunikationseinheit 20 kann über die externe Funkverbindung beispielsweise über das Internet 30 Daten empfangen und diese an das Vermessungsgerät 40 über das interne Netzwerk weiterleiten. So kann die Kommunikationseinheit 20 beispielsweise einsatzbezogene oder einsatzortbezogene Daten abrufen und dem Gerät vor einem Einsatz zur Verfügung stellen, so dass diese direkt nach der Entnahme des Vermessungsgerätes 40 aus dem Behälter 10 am Einsatzort zur Verfügung stehen. Andersherum können auch Daten des Vermessungsgerätes 40 (z. B. bei einem vorherigen Einsatz erfasste Entfernungen oder 3D-Koordinaten) über das interne Funknetz an die Kommunikationseinheit 20 übermittelt werden und von dieser über das Internet 30 an einen externen Server weitergeleitet werden.

Die Kommunikationseinheit 20 ist erfindungsgemäss in der Lage, solche Daten über das Funknetz abzurufen, mittels welchen zumindest eine grobe Lokalisierung des Behälters 10 möglich ist.

Dadurch ist es beispielsweise möglich, zu ermitteln, ob sich der Behälter 10 einem zuvor definierten Einsatzort des Vermessungsgerätes 40 nähert, und es kann ein voraussichtlicher Zeitpunkt des Eintreffens am Einsatzort geschätzt bzw. berechnet werden. Darauf basierend kann die Kommunikationseinheit 20 beispielsweise einen Befehl an die Temperaturregelungseinheit 18 geben, das Vermessungsgerät 40 auf eine optimale Betriebstemperatur vorzuwärmen, oder das Gerät einschalten oder einsatz- oder einsatzortbezogene Daten an das Gerät übermitteln.

Ausserdem kann die Kommunikationseinheit 20 von dem Vermessungsgerät 40 selbst oder über das Internet 30 von einem externen Server Lizenzdaten des Gerätes abrufen, aus denen hervorgeht, in welchen Ländern oder Regionen das transportierte Gerät verwendet werden darf ("Geofencing"). Basierend auf den abgerufenen Lokalisierungsdaten kann die Kommunikationseinheit 20 erkennen, ob das Vermessungsgerät 40 am aktuellen Ort verwendet werden darf. Wenn dies nicht der Fall ist, kann die Kommunikationseinheit 20 z. B. einen Befehl an die Schliesseinheit ausgeben, ein Öffnen durch einen Benutzer zu verhindern, und einen Befehl an die Alarmeinheit 19, bei einem Öffnungsversuch einen Alarm auszulösen bzw. den Benutzer über die Gründe der Nichtöffenbarkeit des Behälters 10 zu informieren.

Alternativ kann die Kommunikationseinheit 20 beispielsweise einen Befehl an das Vermessungsgerät 40 senden, nicht zu funktionieren, bis ein Freischalte-Code eingegeben wird. Ebenso kann der Freischalte-Code am Behälter einzugeben sein, um diesen öffnen zu können. Alternativ kann automatisch eine Information über die Entnahme des Gerätes 40 durch die Kommunikationseinheit 20 an den externen Server gesendet werden, der dann automatisch eine Gebühr von einem Benutzerkonto erhebt.

Vorzugsweise weist der Behälter 10 Mittel auf, um das im Innenraum befindliche Vermessungsgerät bzw. dessen Zubehör zu erkennen. Diese Mittel können beispielsweise RFID-Lesegeräte sein oder umfassen. Vorteilhaft kann so auch vollautomatisch eine Vollständigkeitsprüfung erfolgen. So kann z. B. vor einem Vermessungsauftrag mit diesem abgeglichen werden, ob alle benötigten Teile dabei sind, oder nach Beendigung des Auftrags, ob alle Teile wieder im richtigen Behälter verstaut wurden. Ausserdem kann bei einer Auslieferung ab Werk eine finale berührungslose Prüfung stattfinden, on der Lieferumfang korrekt ist.

Die zentrale Erfassung des Inventars und dessen Aufenthaltsort und Zustand, ist ein wichtiger Nutzen vor allem für das Flottenmanagement von Rental-Firmen und grösseren Dienstleistern oder Baufirmen. Des weiteren können diese Informationen für eine vereinfachte Abrechnung verwenden werden ("pay per use").

Vorzugsweise sind auf der Aussenhülle des Schutzbehälters 10 Mittel zur Anzeige von Informationen angebracht (hier nicht dargestellt). Diese können beispielsweise einen Touchscreen oder ein stromsparendes E-Papier-Display aufweisen. Die darauf angezeigten Informationen können insbesondere den Inhalt des Behälters oder Zustandsparameter oder Konfigurationen der beinhalteten Geräte oder Zubehöre betreffen. Ausserdem können ein Ladezustand einer Batterie des Behälters und/oder des Vermessungsgerätes oder weitere Informationen über Mieter und Besitzer, Auftrags-ID, Rückgabetermin oder ähnliches anzeigbar sein.

Ebenso kann vorzugsweise eine Mensch-Maschine-Schnittstelle vorgesehen sein, die beispielsweise als Touchscreen ausgestaltet sein kann. Diese Schnittstelle kann sowohl auf der Aussenhülle, wie auch im Innenraum angebracht sein.

Diagnostische Informationen - z. B. von Umweltsensoren erfasste Daten oder Informationen über eine Betriebsdauer des Vermessungsgerätes - können an einen zentralen Server versand werden und so einer zentral optimierten Wartungs- und Instandhaltungsplanung Vorschub leisten. Auch Ferndiagnose bzw. -wartung des Vermessungsgerätes sind möglich.

Optional können mehrere Behälter 10 miteinander kommunizieren. Ein solches System von Schutzbehältern kann beispielsweise dazu dienen, vor Fahrtantritt automatisch zu prüfen, ob alle für einen Vermessungsauftrag nötigen Geräte an Bord sind, oder nach Beendigung des Vermessungsauftrags, ob alle verwendeten Geräte wieder verladen sind, ohne die Behälter öffnen zu müssen. Beispielsweise kann dazu einer der Behälter als Master dienen, dessen Kommunikationseinheit eine Liste der zu transportierenden Teile - z. B. über das Funknetz - zur Verfügung gestellt wird, und die diese Liste dann mit den einzelnen Vollständigkeits- und Identitätsprüfungen der Behälter abgleicht und das Ergebnis - z. B. erneut über das Funknetz - einem Benutzer mitteilt.

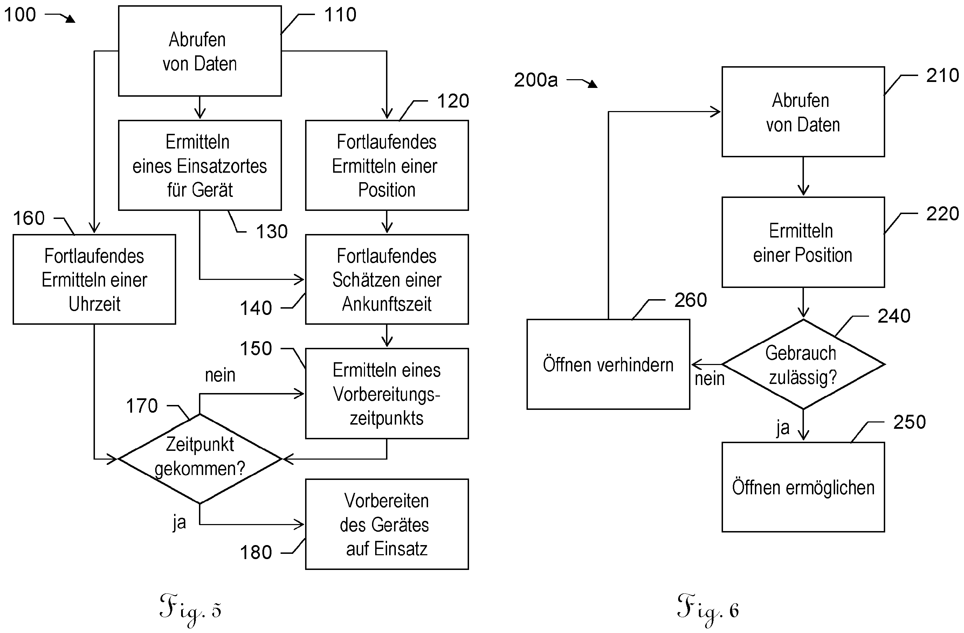

Figur 5 zeigt ein Flussdiagramm zur Illustration einer beispielhaften Ausführungsform eines Verfahrens 100 zum Vorbereiten eines Vermessungsgerätes während eines Transports des Vermessungsgerätes 40 in einem Innenraum 12 eines Behälters 10 auf einen Einsatz an einem bekannten Einsatzort.

Gemäss dem dargestellten Verfahren 100 werden Daten über ein Funknetz abgerufen 110, die unter anderem eine Groblokalisierbarkeit des Vermessungsgerätes bzw. des Behälters bereitstellen (Lokalisierungsdaten). Alternativ können diese Daten auch über ein GNSS-Empfangsmodul empfangbar sein. Basierend auf den abgerufenen Daten wird fortlaufend eine zumindest grobe Position ermittelt 120. Ausserdem wird ein Einsatzort des Vermessungsgerätes ermittelt 130 - beispielsweise ebenfalls aus den abgerufenen Daten oder durch eine Benutzereingabe. Basierend auf der ermittelten Position und dem bekannten Einsatzort wird dann die Restzeit bis zu einer Ankunft am Einsatzort geschätzt 140. In Abhängigkeit von einer bekannten benötigten Vorbereitungszeit wird ein Zeitpunkt ermittelt 150, zu dem mit dem Vorbereiten des Gerätes begonnen werden soll. Gleichzeitig kann fortlaufend (z. B. aus den abgerufenen Daten) eine aktuelle Uhrzeit ermittelt werden 160. Wenn erkannt wird 170, dass der Zeitpunkt zum Vorbereiten des Gerätes gekommen ist, wird das Vermessungsgerät, insbesondere vollautomatisch, auf seinen Einsatz vorbereitet 180. Wie bereits weiter oben beschrieben, kann dazu beispielsweise das Vermessungsgerät eingeschaltet werden, und einsatz- oder einsatzortbezogene Daten an das Vermessungsgerät übermittelt werden. Alternativ oder zusätzlich kann das Vorbereiten ein Aufladen eines Akkus des Vermessungsgerätes oder ein Annähern oder Angleichen der Temperatur im Innenraum des Behälters einer bekannten optimalen Betriebstemperatur des Vermessungsgerätes beinhalten.

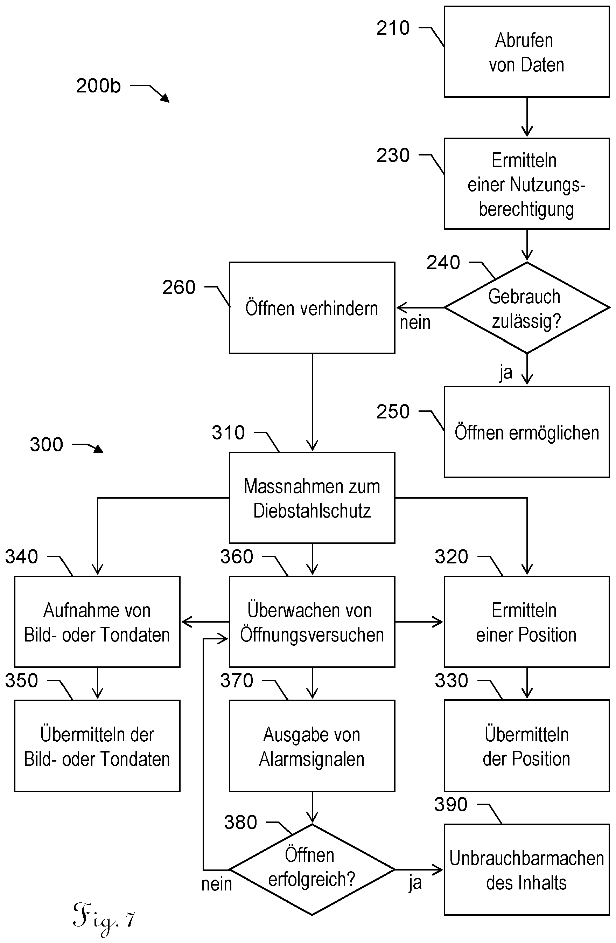

Die Figuren 6 und 7 zeigen jeweils ein Flussdiagramm zur Illustration zweier Ausführungsformen eines Verfahrens 200 zum Verhindern einer unberechtigten Entnahme eines Vermessungsgerätes aus einem Behälter.

In Figur 6 wird eine erste Ausführungsform 200a illustriert. Gemäss dieser Ausführungsform des Verfahrens werden Daten über ein Funknetz abgerufen 210, die unter anderem eine Groblokalisierbarkeit des Vermessungsgerätes bzw. des Behälters bereitstellen. Basierend auf den abgerufenen Daten wird fortlaufend eine zumindest grobe Position ermittelt 220. Wie bereits weiter oben beschrieben, wird anschliessend basierend auf den Daten ermittelt 240, ob eine Nutzungsberechtigung für das im Behälter befindliche Vermessungsgerät am gegenwärtigen Ort vorliegt, also ob der Gebrauch zulässig ist.

Ist dies der Fall, wird dem Benutzer das Öffnen des Behälters und damit die Entnahme des Vermessungsgerätes ermöglicht 250. Ist dies nicht der Fall, wird das Öffnen hingegen verhindert 260.

In Figur 7 wird eine zweite Ausführungsform 200b illustriert. Diese weist zusätzlich zur ersten Ausführungsform eine Diebstahlschutzfunktionalität 300 auf. Gemäss dieser Ausführungsform des Verfahrens werden Daten über ein Funknetz abgerufen 210. Basierend auf diesen Daten kann ermittelt werden 230, ob aktuell eine Nutzungsberechtigung für das Vermessungsgerät vorliegt, also beispielsweise ob das Gerät legal verwendet wird oder als gestohlen gemeldet wurde. Basierend auf den Daten wird ermittelt 240, ob eine Nutzungsberechtigung für das im Behälter befindliche Vermessungsgerät zum gegenwärtigen Zeitpunkt vorliegt, also ob der Gebrauch zulässig ist. Ist dies der Fall, wird dem Benutzer das Öffnen des Behälters und damit die Entnahme des Vermessungsgerätes ermöglicht 250.

Ist dies nicht der Fall, wird das Öffnen hingegen verhindert 260. Ausserdem werden im Rahmen der Diebstahlschutzfunktionalität 300 selbsttätig weitere Massnahmen 310 ergriffen.

Diese Maßnahmen können beispielsweise das Ermitteln 320 einer Position und das Übermitteln dieser Position über das Funknetz an einen externen Server beihalten. Ausserdem kann eine Aufnahme 340 von Bild- und Tondaten zur Identifizierung der unrechtmässigen Besitzer und das Übermitteln dieser Bild- und Tondaten über das Funknetz an den externen Server erfolgen. Diese Maßnahmen können zum einen kontinuierlich erfolgen und sofort, nachdem ein Diebstahl erkannt wurde. Andererseits kann eine Überwachung 360 auf Öffnungsversuche erfolgen, die diese Massnahmen auslöst. Ein erkannter Öffnungsversuch kann ausserdem einen Alarm auslösen 370, wie schon weiter oben beschrieben. Insbesondere wenn erkannt wird 380, dass ein erfolgreicher Öffnungsversuch erfolgt ist, oder unmittelbar bevorsteht, können der Inhalt oder wesentliche Teile des Vermessungsgerätes auch zerstört bzw. unbrauchbar gemacht werden 390 - z. B. mechanisch, thermisch oder elektrisch. Alternativ kann beispielsweise mit einer auffälligen Farbe das Gerät als gestohlen gekennzeichnet werden. Auch kann ein von der Kommunikationseinheit Befehl an das Gerät übermittelt werden, in einen Diebstahl- oder Sperrmodus zu verfallen, in dem wesentliche Funktionen des Vermessungsgerätes ausser Betrieb sind. Um das Gerät wieder funktionsfähig zu machen, kann dann beispielsweise ein Entsperrcode nötig sein.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

## Patentansprüche

1. Tragbarer Schutzbehälter (10) zum Transport eines elektrischen Vermessungsgerätes (40), mit
- einer äusseren Hülle (11) mit innerer Verschalung, die einen Innenraum (12) umschliesst, welcher zur Aufnahme des Vermessungsgerätes (40) ausgestaltet ist,
- einem Griff, der dazu ausgestaltet ist, ein Tragen des Schutzbehälters (10) durch einen Benutzer zu ermöglichen,
- einem Schliessmechanismus (13), der dazu ausgestaltet ist, ein Öffnen des Schutzbehälters (10) durch einen Benutzer zu ermöglichen,
- einer in den Schutzbehälter (10), insbesondere in die Hülle oder die Verschalung, integrierten Kommunikationseinheit (20),
- einer mindestens einen Akkumulator (21) aufweisenden Versorgungseinheit zur Stromversorgung der Kommunikationseinheit (20), und
- Überprüfungsmitteln zum Überprüfen eines Vorhandenseins und einer Identität eines Vermessungsgerätes (40) im Innenraum (12),
wobei die Kommunikationseinheit (20) dazu ausgestaltet ist,
- Daten über Vorhandensein und Identität des Vermessungsgerätes (40) abzurufen,
- Daten mit dem Vermessungsgerät (40) auszutauschen, und
- Daten über ein externes Funknetz abzurufen und zu versenden, insbesondere über ein terrestrisches oder satellitengestütztes Mobilfunknetz oder ein lokales Netzwerk,
- über das Funknetz Lokalisierungsdaten abzurufen, die eine zumindest grobe Position des Schutzbehälters (10) bereitstellen, und
- über das Funknetz abgerufene Daten an das Vermessungsgerät (40) weiterzuleiten und/oder von dem Vermessungsgerät (40) empfangene Daten über das Funknetz zu versenden,
**dadurch gekennzeichnet, dass**
der Innenraum (12) mindestens eine Halterung aufweist, wobei die mindestens eine Halterung speziell zur Aufnahme eines bestimmten Vermessungsgeräte-Typs mit bekannten Ausmassen ausgestaltet ist, wobei der Schutzbehälter (10) auf der äusseren Hülle (11)
eine Mensch-Maschine-Schnittstelle und eine Anzeigeeinheit zum Anzeigen von Informationen über ein im Innenraum (12) befindliches Vermessungsgerät (40) aufweist, wobei die Kommunikationseinheit (20) dazu ausgestaltet ist,
- die Informationen über das im Innenraum (12) befindliche Vermessungsgerät (40) der Anzeigeeinheit bereitzustellen,
wobei der Schutzbehälter (10) eine automatisch ablaufende Diebstahlschutzfunktionalität (300) aufweist, wobei die Kommunikationseinheit (20) dazu ausgestaltet ist,
- von einem externen Server (35) Daten abzurufen, aus denen ein Vorliegen oder Nichtvorliegen einer zeit- und/oder personenbezogenen Nutzungsberechtigung des Vermessungsgerätes (40) ermittelbar ist, wobei insbesondere ermittelbar ist, ob das Vermessungsgerät (40) als gestohlen gemeldet wurde, und
- basierend auf den Daten das Vorliegen oder Nichtvorliegen einer Nutzungsberechtigung des Vermessungsgerätes (40) zu ermitteln,
wobei, wenn ein Nichtvorliegen einer Nutzungsberechtigung des Vermessungsgerätes (40) ermittelt wurde, die Kommunikationseinheit (20) im Rahmen der Diebstahlschutzfunktionalität (300) dazu ausgestaltet ist,
- einen Befehl an den Schliessmechanismus (13) zu senden, wobei der Schliessmechanismus (13) dazu ausgestaltet ist, in Abhängigkeit von dem von der Kommunikationseinheit (20) erhaltenen Befehl ein Öffnen des Schutzbehälters (10) durch einen Benutzer zu verhindern, und
- weitere Massnahmen (310) zu ergreifen, wobei die weiteren Massnahmen mindestens ein Übermitteln einer Position des Schutzbehälters (10) an den externen Server (35) umfassen, sowie ein Senden eines Befehls an ein im Innenraum (12) befindliches Vermessungsgerät (40), bis zu einer Freischaltung des Vermessungsgerätes (40) mittels eines Codes einen Sperrmodus zu aktivieren, in welchem wesentliche Funktionen des Vermessungsgerätes (40) nicht zur Verfügung stehen.

2. Schutzbehälter (10) nach Anspruch 1,
**dadurch gekennzeichnet, dass**
die Kommunikationseinheit (20) dazu ausgestaltet ist, basierend auf einer ermittelten Position des Schutzbehälters (10) einen Befehl an ein im Innenraum (12) befindliches Vermessungsgerät (40) zu senden, einen Sperrmodus zu aktivieren oder zu deaktivieren, in welchem wesentliche Funktionen des Vermessungsgerätes (40) nicht zur Verfügung stehen, insbesondere bis zu einer Freischaltung des Vermessungsgerätes (40) mittels eines Codes.

3. Schutzbehälter (10) nach Anspruch 1 oder Anspruch 2,
**dadurch gekennzeichnet, dass**
der Schutzbehälter (10) Mittel aufweist, die dazu ausgestaltet sind, einen Öffnungsversuch des Schliessmechanismus (13) zu erkennen und an die Kommunikationseinheit (20) zu melden, wobei eine Überwachung (360) auf Öffnungsversuche erfolgt, und ein erkannter Öffnungsversuch oder ein erkannter erfolgreicher Öffnungsversuch (380) die Massnahmen (310) auslösen.

4. Schutzbehälter (10) nach einem der vorangehenden Ansprüche,
**dadurch gekennzeichnet, dass**
der Schutzbehälter (10) Mittel aufweist, die dazu ausgestaltet sind, ein gewaltsames Öffnen des Schutzbehälters (10) zu erkennen, wobei eine Überwachung (360) auf Öffnungsversuche erfolgt, und ein erkannter Öffnungsversuch oder ein erkannter erfolgreicher Öffnungsversuch (380) die Massnahmen (310) auslöst.

5. Schutzbehälter (10) nach einem der vorangehenden Ansprüche,
**dadurch gekennzeichnet, dass**
die Kommunikationseinheit (20) im Rahmen der Diebstahlschutzfunktionalität (300) dazu ausgestaltet ist, als weitere Massnahme (310) einen Befehl an eine Alarmeinheit (19) des Schutzbehälters (10) zu senden, wobei die Alarmeinheit (19) dazu ausgestaltet ist, in Abhängigkeit von dem von der Kommunikationseinheit (20) erhaltenen Befehl ein optisches und/oder akustisches Warnsignal auszugeben (370).

6. Schutzbehälter (10) nach einem der vorangehenden Ansprüche,
**dadurch gekennzeichnet, dass**
die Kommunikationseinheit (20) im Rahmen der Diebstahlschutzfunktionalität (300) dazu ausgestaltet ist, insbesondere wenn erkannt wird (380), dass ein erfolgreicher Öffnungsversuch erfolgt ist oder unmittelbar bevorsteht, als weitere Massnahme (310)
- einen Befehl an eine Selbstzerstörungseinheit des Schutzbehälters (10) zu senden, und die Selbstzerstörungseinheit dazu ausgestaltet ist, in Abhängigkeit von dem von der Kommunikationseinheit (20) erhaltenen Befehl ein im Innenraum (12) befindliches Vermessungsgerät (40) unbrauchbar zu machen (390), und/oder
- einen Befehl an eine Markierungseinheit des Schutzbehälters (10) zu senden, und die Markierungseinheit dazu ausgestaltet ist, in Abhängigkeit von dem von der Kommunikationseinheit (20) erhaltenen Befehl ein im Innenraum (12) befindliches Vermessungsgerät (40) optisch zu markieren.

7. Schutzbehälter (10) nach einem der vorangehenden Ansprüche,
**dadurch gekennzeichnet, dass**
die Kommunikationseinheit (20) dazu ausgestaltet ist, eine Verbindung mit dem Internet (30) herzustellen, und Daten über das Internet abzurufen und zu versenden.

8. Schutzbehälter (10) nach einem der vorangehenden Ansprüche,
**dadurch gekennzeichnet, dass**
die Überprüfungsmittel Mittel zum Generieren eines kabellosen Datennetzwerkes im Innenraum (12), insbesondere mittels Bluetooth oder mittels eines WLAN-Signals, aufweisen, und die Kommunikationseinheit (20) dazu ausgestaltet ist, über das kabellose Datennetzwerk Daten mit dem Vermessungsgerät (40) auszutauschen.

9. Schutzbehälter (10) nach einem der vorangehenden Ansprüche,
**dadurch gekennzeichnet, dass**
- die Position des Schutzbehälters (10) auf mindestens dreihundert Meter genau ermittelbar ist, insbesondere auf mindestens dreissig Meter genau; und
- die Kommunikationseinheit (20) dazu ausgestaltet ist, basierend auf einer Vielzahl von abgeleiteten Positionen des Schutzbehälters (10) ein Bewegungsprofil zu erstellen.

10. Verfahren (200b) zum Verhindern einer unberechtigten Verwendung eines in einem tragbaren Schutzbehälter (10) befindlichen Vermessungsgerätes (40) mit
- einem Austauschen von Daten zwischen dem Vermessungsgerät (40) und einer Kommunikationseinheit (20) des Schutzbehälters (10),
- einem Abrufen von Lokalisierungsdaten über ein Funknetz, wobei die Lokalisierungsdaten eine zumindest grobe Position des Schutzbehälters bereitstellen,
**gekennzeichnet durch**
- ein Bereitstellen von Informationen über das Vermessungsgerät (40) durch die Kommunikationseinheit (20) an eine auf einer äusseren Hülle (11) des Schutzbehälters (10) befindliche Anzeigeeinheit;
- ein Anzeigen der Informationen über das Vermessungsgerät (40) auf der Anzeigeeinheit;
- ein Abrufen (210) von Daten von einem externen Server (35) über ein Funknetz durch die Kommunikationseinheit (20), aus welchen Daten ein Vorliegen oder Nichtvorliegen einer zeit- oder personenbezogenen Nutzungsberechtigung des Vermessungsgerätes (40) ermittelbar ist, insbesondere ob das Vermessungsgerät (40) legal verwendet wird oder als gestohlen gemeldet wurde,
- ein Ermitteln (230), basierend auf den von dem externen Server (35) abgerufenen Daten, ob eine zeit- oder personenbezogene Nutzungsberechtigung für das Vermessungsgerät (40) vorliegt,
- eine automatisch ablaufenden Diebstahlschutzfunktionalität (300), wobei, wenn die Nutzungsberechtigung nicht vorliegt,
- ein Öffnen des Behälters verhindert wird (260), und
- im Rahmen der Diebstahlschutzfunktionalität (300) selbsttätig weitere Massnahmen (310) ergriffen werden, wobei die weiteren Massnahmen mindestens ein Ermitteln (320) einer Position des Schutzbehälters (10) basierend auf den Lokalisierungsdaten und ein Übermitteln (330) der Position an den externen Server (35) umfassen, sowie ein Senden eines Befehls an das Vermessungsgerät (40), bis zu einer Freischaltung mittels eines Codes einen Sperrmodus zu aktivieren, in welchem wesentliche Funktionen des Vermessungsgerätes (40) nicht zur Verfügung stehen.

11. Verfahren (200b) nach Anspruch 10,
**gekennzeichnet durch**
eine Überwachung (360) auf Öffnungsversuche des Schutzbehälters (10), insbesondere auf gewaltsame Öffnungsversuche, wobei ein erkannter Öffnungsversuch oder ein erkannter erfolgreicher Öffnungsversuch (380) die weiteren Massnahmen (310) auslöst.

12. Verfahren (200b) nach Anspruch 10 oder Anspruch 11,
**dadurch gekennzeichnet, dass**
die weiteren Massnahmen (310) eine Ausgabe (370) eines optischen und/oder akustischen Warnsignals umfassen.

13. Verfahren (200b) nach einem der Ansprüche 10 bis 12,
**dadurch gekennzeichnet, dass**
als weitere Massnahmen (310) insbesondere wenn erkannt wird (380), dass ein erfolgreicher Öffnungsversuch erfolgt ist oder unmittelbar bevorsteht,
- das Vermessungsgerät (40) optisch markiert wird; und/oder
- das Vermessungsgerät (40) unbrauchbar gemacht wird, wobei wesentliche Funktionen des Vermessungsgerätes (40)
- deaktiviert werden, wobei diese insbesondere bis zu einer Freischaltung mittels eines Codes nicht zur Verfügung stehen, oder
- dauerhaft zerstört werden (390).

14. Verfahren (200b) nach einem der Ansprüche 10 bis 13,
**dadurch gekennzeichnet, dass**
als weitere Massnahmen (310) eine Aufnahme (340) von Bild- und Tondaten zur Identifizierung unrechtmässiger Besitzer und ein Übermitteln (350) der Bild- und Tondaten über das Funknetz an den externen Server erfolgen.

## Claims

1. Portable protective container (10) for transporting an electrical surveying device (40), having
- an outer shell (11) with inner casing, which encloses an interior space (12), which is configured to accommodate the surveying device (40),
- a handle configured to allow the protective container (10) to be carried by a user,
- a closing mechanism (13) configured to allow the protective container (10) to be opened by a user,
- a communication unit (20) integrated into the protective container (10), in particular into the shell or the casing,
- a power supply unit comprising at least one accumulator (21) for supplying power to the communication unit (20), and
- verification means for verifying a presence and an identity of a surveying device (40) in the interior space (12),
wherein the communication unit (20) is configured to
- retrieve data on the presence and identity of the surveying device (40),
- exchange data with the surveying device (40), and
- retrieve and send data via an external radio network, in particular via a terrestrial or satellite-based mobile radio network or a local area network,
- retrieve, via the radio network, localization data providing at least a rough position of the protective container (10), and
- forward data retrieved via the radio network to the surveying device (40) and/or send data received from the surveying device (40) via the radio network,
**characterized in that**
the interior space (12) comprises at least one holder, wherein the at least one holder is specifically configured to accommodate a particular type of surveying device of known dimensions, wherein the protective container (10) comprises on the outer shell (11) a man-machine interface and a display unit for displaying information about a surveying device (40) located in the interior space (12), wherein the communication unit (20) is configured to
- provide the information about the surveying device (40) located in the interior space (12) of the display unit,
wherein the protective container (10) comprises an automatically running anti-theft functionality (300), wherein the communication unit (20) is configured to
- retrieve data from an external server (35) from which the existence or non-existence of a time-based and/or person-based authorization to use the surveying device (40) can be determined, wherein it is possible in particular to determine whether the surveying device (40) has been reported as stolen, and
- determine, based on the data, the existence or non-existence of an authorization to use the surveying device (40),
wherein, when a non-existence of an authorization to use the surveying device (40) has been determined, the communication unit (20) is configured within the scope of the anti-theft functionality (300) to
- send a command to the closing mechanism (13), wherein the closing mechanism (13) is configured to prevent opening of the protective container (10) by a user as a function of the command received from the communication unit (20), and
- take further measures (310), wherein the further measures comprise at least transmitting a position of the protective container (10) to the external server (35), and sending a command to a surveying device (40) located in the interior space (12) to activate a blocking mode in which essential functions of the surveying device (40) are not available until the surveying device (40) is enabled by means of a code.

2. Protective container (10) according to claim 1, **characterized in that** the communication unit (20) is configured to send a command to a surveying device (40) located in the interior space (12), based on a determined position of the protective container (10), to activate or deactivate a blocking mode in which essential functions of the surveying device (40) are not available, in particular until the surveying device (40) is enabled by means of a code.

3. Protective container (10) according to claim 1 or claim 2, **characterized in that** the protective container (10) has means which are configured to detect an attempted opening of the closing mechanism (13) and to report this to the communication unit (20), wherein monitoring (360) for opening attempts takes place, and a detected opening attempt or a detected successful opening attempt (380) triggers the measures (310).

4. Protective container (10) according to one of the preceding claims,
**characterized in that** the protective container (10) comprises means configured to detect forced opening of the protective container (10), wherein monitoring (360) for opening attempts is performed, and a detected opening attempt or a detected successful opening attempt (380) triggers the measures (310).

5. Protective container (10) according to one of the preceding claims,
**characterized in that** the communication unit (20) is configured, within the scope of the anti-theft functionality (300), to send a command to an alarm unit (19) of the protective container (10) as a further measure (310), wherein the alarm unit (19) is configured to output (370) a visual and/or audible warning signal as a function of the command received from the communication unit (20).

6. Protective container (10) according to one of the preceding claims,
**characterized in that** the communication unit (20) is configured, within the scope of the anti-theft functionality (300), in particular when it is detected (380) that a successful opening attempt has occurred or is imminent, as a further measure (310)
- to send a command to a self-destruction unit of the protective container (10), and the self-destruction unit is configured to render unusable (390) a surveying device (40) located in the interior space (12) as a function of the command received from the communication unit (20), and/or
- to send a command to a marking unit of the protective container (10), and the marking unit is designed to optically mark a surveying device (40) located in the interior space (12) as a function of the command received from the communication unit (20).

7. Protective container (10) according to one of the preceding claims,
**characterized in that** the communication unit (20) is configured to establish a connection with the Internet (30), and to retrieve and send data via the Internet.

8. Protective container (10) according to one of the preceding claims,
**characterized in that** the verification means comprise means for generating a wireless data network in the interior space (12), in particular by means of Bluetooth or by means of a WLAN signal, and the communication unit (20) is designed to exchange data with the surveying device (40) via the wireless data network.

9. Protective container (10) according to one of the preceding claims,
**characterized in that**
- the position of the protective container (10) can be determined with an accuracy of at least three hundred meters, in particular with an accuracy of at least thirty meters; and
- the communication unit (20) is configured to generate a motion profile based on a plurality of derived positions of the protective container (10).

10. Method (200b) for preventing unauthorized use of a surveying device (40) located in a portable protective container (10), comprising
- an exchange of data between the surveying device (40) and a communication unit (20) of the protective container (10),
- a retrieval of localization data via a radio network, wherein the localization data provide an at least rough position of the protective container,
**characterized by**
- a provision of information about the surveying device (40) by the communication unit (20) to a display unit located on an outer shell (11) of the protective container (10);
- a display of the information about the surveying device (40) on the display unit;
- a retrieval (210) of data from an external server (35) via a radio network by the communication unit (20), from which data an existence or non-existence of a time-based or person-based authorization to use the surveying device (40) can be determined, in particular whether the surveying device (40) is being used legally or has been reported as stolen,
- a determination (230), based on the data retrieved from the external server (35), whether a time-based or person-based authorization to use the surveying device (40) is present,
- an automatically running anti-theft functionality (300), wherein, if the user authorization is not present,
- an opening of the container is prevented (260), and
- further measures (310) are automatically taken within the scope of the anti-theft functionality (300), wherein the further measures comprise at least a determination (320) of a position of the protective container (10) based on the localization data and a transmission (330) of the position to the external server (35), and a sending of a command to the surveying device (40) to activate a blocking mode in which essential functions of the surveying device (40) are not available until it is enabled by means of a code.

11. Method (200b) according to claim 10, **characterized by** a monitoring (360) for attempts to open the protective container (10), in particular for forcible opening attempts, wherein a detected opening attempt or a detected successful opening attempt (380) triggers the further measures (310).

12. Method (200b) according to claim 10 or claim 11, **characterized in that** the further measures (310) comprise an output (370) of a visual and/or audible warning signal.

13. Method (200b) according to one of claims 10 to 12, **characterized in that,** as further measures (310), in particular when it is detected (380) that a successful opening attempt has been made or is imminent,
- the surveying device (40) is optically marked; and/or
- the surveying device (40) is rendered unusable, wherein essential functions of the surveying device (40)
- are deactivated, wherein these are not available in particular until they are enabled by means of a code, or
- are permanently destroyed (390).

14. Method (200b) according to one of claims 10 to 13, **characterized in that** as further measures (310) a recording (340) of image and sound data for identifying unlawful owners and a transmission (350) of the image and sound data via the radio network to the external server are performed.

## Revendications

1. Récipient de sécurité portable (10) pour le transport d'un appareil d'arpentage électrique (40), doté
- d'une enveloppe extérieure (11) dotée d'une coque interne entourant un espace intérieur (12), laquelle est configurée pour loger l'appareil d'arpentage (40),
- d'une poignée, laquelle est configurée pour permettre à un utilisateur de porter le récipient de sécurité (10),
- d'un mécanisme de fermeture, lequel est configuré pour permettre à un utilisateur d'ouvrir le récipient de sécurité (10),
- d'une unité de communication (20) intégrée dans le récipient de sécurité (10), en particulier dans l'enveloppe ou dans la coque,
- d'une unité d'alimentation comportant au moins un accumulateur (21) pour l'alimentation en courant de l'unité de communication (20), et
- de moyens de contrôle destiné à contrôler une présence et une identité d'un appareil d'arpentage (40) dans l'espace intérieur (12), dans lequel l'unité de communication (20) est configurée pour
- rappeler des données concernant la présence et l'identité de l'appareil d'arpentage (40), échanger des données avec l'appareil d'arpentage (40) et
- rappeler et envoyer des données par le biais d'un réseau radio externe, en particulier par le biais d'un réseau mobile terrestre ou satellite ou d'un réseau local,
- rappeler par le biais du réseau radio des données de localisation, fournissant une position au moins grossière du récipient de sécurité (10), et
- transmettre à l'appareil d'arpentage (40) des données rappelées par le biais du réseau radio et/ou émettre par le biais du réseau radio des données reçues par l'appareil d'arpentage (40),
**caractérisé en ce que** l'espace intérieur (12) comporte au moins un maintien, dans lequel l'au moins un maintien est configuré spécialement pour le logement d'un type déterminé d'appareil d'arpentage de dimensions connues, dans lequel le récipient de sécurité (10) comporte sur l'enveloppe extérieure (11) une interface homme-machine et une unité d'affichage destinée à afficher des informations sur un appareil d'arpentage (40) se trouvant dans l'espace intérieur (12), dans lequel l'unité de communication (20) est configurée pour
- fournir à l'unité d'affichage les informations sur l'appareil d'arpentage (40) se trouvant dans l'espace intérieur (12),
dans lequel le récipient de sécurité (10) comporte une fonctionnalité automatique de protection antivol (300), dans lequel l'unité de communication (20) est configurée pour
- rappeler des données depuis un serveur externe (35), à partir desquelles une existence ou inexistence d'une habilitation personnelle et/ou temporelle à l'utilisation de l'appareil d'arpentage (40) peut être déterminée, dans lequel il est en particulier possible de déterminer si l'appareil d'arpentage (40) a été déclaré comme volé, et
- en se basant sur les données, déterminer l'existence ou l'inexistence d'une habilitation à l'utilisation de l'appareil d'arpentage (40), dans lequel, lorsqu'une inexistence d'une habilitation à l'utilisation de l'appareil d'arpentage (40) est déterminée, l'unité de communication (20) est, dans le cadre de la fonctionnalité de protection antivol (300), configurée pour
- envoyer un ordre au mécanisme de fermeture (13), dans lequel le mécanisme de fermeture (13) est configuré pour, en fonction de l'ordre obtenu de l'unité de communication (20), empêcher une ouverture par un utilisateur du récipient de sécurité (10), et
- prendre des mesures supplémentaires (310), dans lequel les mesures supplémentaires comprennent au moins une transmission d'une position du récipient de sécurité (10) au serveur externe (35), ainsi qu'un envoi à un appareil d'arpentage (40) se trouvant dans l'espace intérieur (12) d'un ordre d'activer un mode de verrouillage jusqu'à un déblocage de l'appareil d'arpentage (40) au moyen d'un code, où les fonctions essentielles de l'appareil d'arpentage (40) ne sont pas disponibles.

2. Récipient de sécurité (10) selon la revendication 1,
**caractérisé en ce que** l'unité de communication (20) est configurée pour, en se basant sur une position déterminée du récipient de sécurité (10), envoyer à un appareil d'arpentage (40) se trouvant dans l'espace intérieur (12) un ordre d'activer ou de désactiver un mode de verrouillage, où les fonctions essentielles de l'appareil d'arpentage (40) ne sont pas disponibles, en particulier jusqu'à un déblocage de l'appareil d'arpentage (40) au moyen d'un code.

3. Récipient de sécurité (10) selon la revendication 1 ou la revendication 2,
**caractérisé en ce que** le récipient de sécurité (10) comporte des moyens qui sont configurés pour reconnaître une tentative d'ouverture du mécanisme de fermeture (13) et notifier celle-ci à l'unité de communication (20), dans lequel une surveillance (360) des tentatives d'ouverture est effectuée et une tentative d'ouverture reconnue ou une tentative d'ouverture réussie (380) reconnue déclenche les mesures (310).

4. Récipient de sécurité (10) selon l'une des revendications précédentes,
**caractérisé en ce que** le récipient de sécurité (10) comporte des moyens qui sont configurés pour reconnaître une ouverture de force du récipient de sécurité (10), dans lequel une surveillance (360) des tentatives d'ouverture est effectuée et une tentative d'ouverture reconnue ou une tentative d'ouverture réussie (380) reconnue déclenche les mesures (310).

5. Récipient de sécurité (10) selon l'une des revendications précédentes,
**caractérisé en ce que** l'unité de communication (20) est, dans le cadre de la fonctionnalité de protection antivol (300), configurée pour envoyer un ordre à une unité d'alarme du récipient de sécurité (10) comme mesure supplémentaire (310), dans lequel l'unité d'alarme (19) est configurée pour, en fonction de l'ordre obtenu de l'unité de communication (20), émettre un signal d'avertissement optique et/ou acoustique (370).

6. Récipient de sécurité (10) selon l'une des revendications précédentes,
**caractérisé en ce que** l'unité de communication (20) est, dans le cadre de la fonctionnalité de protection antivol (300), configurée pour, en particulier lorsqu'est reconnu (380) qu'une tentative d'ouverture réussie est effectuée ou est imminente, en tant que mesures supplémentaires (310)
- envoyer un ordre à une unité d'autodestruction du récipient de sécurité (10), et l'unité d'autodestruction est configurée pour, en fonction de l'ordre obtenu de l'unité de communication (20), rendre inutilisable (390) un appareil d'arpentage (40) se trouvant dans l'espace intérieur (12), et/ou
- envoyer un ordre à une unité de marquage du récipient de sécurité (10), et l'unité de marquage est configurée pour, en fonction de l'ordre obtenu de l'unité de communication (20), marquer optiquement un appareil d'arpentage (40) se trouvant dans l'espace intérieur (12).

7. Récipient de sécurité (10) selon l'une des revendications précédentes,
**caractérisé en ce que** l'unité de communication (20) est configurée pour établir une connexion à Internet (30), et rappeler et envoyer des données par le biais d'Internet.

8. Récipient de sécurité (10) selon l'une des revendications précédentes,
**caractérisé en ce que** les moyens de contrôle comportent des moyens de générer un réseau de données sans fil dans l'espace intérieur (12), en particulier au moyen de Bluetooth ou d'un signal WLAN, et l'unité de communication (20) est configurée pour échanger des données avec l'appareil d'arpentage (40) par le biais du réseau de données sans fil.

9. Récipient de sécurité (10) selon l'une des revendications précédentes,
**caractérisé en ce que**
- la position du récipient de sécurité (10) peut être déterminée à au moins trois cent mètres près, en particulier à au moins trente mètres près ; et
- l'unité de communication (20) est configurée pour générer un profil de mouvement en se basant sur une pluralité de positions dérivées du récipient de sécurité (10).

10. Procédé (200b) destiné à empêcher une utilisation non autorisée d'un appareil d'arpentage (40) se trouvant dans un récipient de sécurité portable (10), avec
- un échange de données entre l'appareil d'arpentage (40) et une unité de communication (20) du récipient de sécurité (10),
- un rappel de données de localisation par le biais d'un réseau radio, dans lequel les données de localisation fournissent une position au moins grossière du récipient de sécurité, **caractérisé par**
- une fourniture d'informations sur l'appareil d'arpentage (40) par l'unité de communication (20) à une unité d'affichage se trouvant sur une enveloppe extérieure (11) du récipient de sécurité (10) ;
- un affichage sur l'unité d'affichage des informations sur l'appareil d'arpentage (40) ;
- un rappel de données (210) par l'unité de communication (20) depuis un serveur externe (35) par le biais d'un réseau radio, à partir desquelles données une existence ou inexistence d'une habilitation personnelle et/ou temporelle à l'utilisation de l'appareil d'arpentage (40) peut être déterminée, en particulier si l'appareil d'arpentage (40) est utilisé légalement ou a été déclaré comme volé,
- une détermination (230), en se basant sur les données rappelées depuis le serveur externe (35), si une habilitation personnelle et/ou temporelle à l'utilisation de l'appareil d'arpentage (40) existe,
- une fonctionnalité automatique de protection antivol (300),
dans lequel, lorsque l'habilitation à l'utilisation n'existe pas,
- une ouverture du récipient est empêchée (260), et
- dans le cadre de la fonctionnalité de protection antivol (300) plusieurs mesures supplémentaires (310) sont prises, dans lequel les mesures supplémentaires comprennent au moins une détermination (320) d'une position du récipient de sécurité (10) en se basant sur les données de localisation et une transmission (330) de la position au serveur externe (35), ainsi qu'un envoi à l'appareil d'arpentage (40) se trouvant d'un ordre d'activer un mode de verrouillage jusqu'à un déblocage au moyen d'un code, où les fonctions essentielles de l'appareil d'arpentage (40) ne sont pas disponibles.

11. Procédé (200b) selon la revendication 10,
**caractérisé par** une surveillance (360) des tentatives d'ouverture du récipient de sécurité (10), en particulier des tentatives d'ouverture de force, dans lequel une tentative d'ouverture reconnue ou une tentative d'ouverture réussie (380) reconnue déclenche les mesures supplémentaires (310).

12. Procédé (200b) selon la revendication 10 ou la revendication 11,
**caractérisé en ce que** les mesures supplémentaires (310) comprennent une émission (370) d'un signal d'avertissement optique et/ou acoustique.

13. Procédé (200b) selon l'une des revendications 10 à 12,
**caractérisé en ce que**, en tant que mesures supplémentaires (310), en particulier lorsqu'est reconnu (380) qu'une tentative d'ouverture réussie est effectuée ou est imminente,
- l'appareil d'arpentage (40) est marqué optiquement ; et/ou
- l'appareil d'arpentage (40) est rendu inutilisable, dans lequel des fonctions essentielles de l'appareil d'arpentage (40)
- sont désactivées, dans lequel celles-ci ne sont en particulier pas disponibles jusqu'à un déblocage au moyen d'un code, ou
- sont détruites durablement (390).

14. Procédé (200b) selon l'une des revendications 10 à 13,
**caractérisé en ce que**, en tant que mesures supplémentaires (310), une capture (340) de données d'image et de son destinées à l'identification d'un possesseur non autorisé et une transmission (350) des données d'image et de son au serveur externe par le biais du réseau radio sont effectuées.
